# DEMANDE DE BREVET EUROPEEN

(11) **EP 1 816 584 A2**
(43) Date de publication de la demande: **08.08.2007**
(21) Numéro de dépôt: 07101217.3
(22) Date de dépôt: 26.01.2007
(51) Int. Cl.: G06K 7/00

(54) **Station de lecture/écriture d'étiquettes électroniques**

(30) Priorité: 07.02.2006 FR 0650431
(71) Demandeur: SCHNEIDER ELECTRIC INDUSTRIES SAS, 92500 Rueil-Malmaison (FR)
(72) Inventeur: CHAUVET, Francis, 16440, MOUTIERS (FR); EMMANUEL, Michel, 16380, CHAZELLES (FR)
(74) Mandataire: Bié, Nicolas

(57) **Abrégé**

La présente invention concerne une station de lecture/écriture (ST) comportant un boîtier (1) incluant notamment une mémoire (M) et une antenne (AN) pour échanger des données sans contact par technologie inductive avec des étiquettes électroniques (ET, ETI) présentant chacune une antenne (5, 8), une mémoire (60, 70) et des moyens de traitement de données (61, 71) pour interpréter des requêtes envoyées par la station (ST), caractérisée en ce que :
- Une étiquette électronique, dite étiquette électronique intégrée (ETI), apte à stocker des données dans sa mémoire (70), est intégrée dans la station de lecture (ST),
- l'étiquette électronique intégrée (ETI) est située dans la station de lecture (ST) à portée de l'antenne (AN) de la station de lecture (ST).

L'étiquette électronique intégrée (ETI) permet notamment de stocker des données relatives à la configuration de la station de lecture (ST) et/ou des données applicatives.

## Description

La présente invention se rapporte à une station de lecture/écriture comportant notamment une mémoire et une antenne pour échanger des données sans contact par technologie inductive avec des étiquettes électroniques présentant chacune une antenne, une mémoire et des moyens de traitement de données pour interpréter des requêtes envoyées par la station.

Un système d'identification RFID (en français Identification par Radio Fréquence) est couramment utilisé pour identifier à l'aide d'une station de lecture/écriture des objets portant chacun une étiquette électronique d'identification. A portée de la station de lecture/écriture, l'étiquette électronique échange avec la station des informations diverses telles que par exemple des informations d'identification ou des informations liées au processus de fabrication en cours.

Dans un système d'identification de type RFID, chaque station de lecture/écriture comporte une antenne générant un champ magnétique permettant d'alimenter chaque étiquette électronique passant à sa portée et de dialoguer avec celle-ci selon un protocole de communication prédéfini. L'étiquette est alimentée par la "porteuse" émise à partir de l'antenne de la station. L'énergie captée par l'antenne de l'étiquette est transformée en énergie électrique et alimente les circuits internes (mémoire, circuit de commande,...) de ladite étiquette pour que celle-ci exécute les programmes pour lesquels elle est conçue. Cette étiquette électronique mémorise des données, exécute les ordres en provenance de la station et transmet les données demandées vers la station. La procédure d'échange comporte plusieurs phases, notamment : envoi d'énergie dès que l'étiquette arrive à portée de la station de lecture/écriture, envoi d'un ordre d'identification par la station de lecture/écriture, envoi d'un ordre de lecture/écriture, écriture des données ou lecture des données.

L'échange de données en RFID sans contact s'effectue par une technologie inductive qui est basée sur l'exploitation d'un signal électromagnétique (porteuse) moyenne fréquence pour la transmission sans contact d'informations entre les stations et les étiquettes électroniques. Pour transmettre des données à la station de lecture/écriture, l'étiquette module la fréquence porteuse en amplitude et/ou en phase. La station de lecture/écriture transforme ensuite le signal reçu en langage binaire.

Une station de lecture/écriture subissant une panne ou détruite suite par exemple à un problème électrique, doit être immédiatement remplacée par une nouvelle station pour ne pas perturber le déroulement du processus industriel. La nouvelle station doit être configurée avec les mêmes paramètres que la station endommagée. Or, si la station qui a été remplacée est profondément endommagée, ses paramètres de configuration ou ses données applicatives ne sont souvent pas facilement récupérables. Une programmation complète de la nouvelle station est souvent nécessaire ce qui peut prendre du temps et peut perturber le déroulement du processus industriel en cours.

Le document EP 1 560 149 décrit un terminal du type téléphone portable intégrant un circuit de lecture/écriture RFID et une étiquette électronique RFID. Les antennes du circuit de lecture/écriture et de l'étiquette électronique sont arrangées à proximité l'une de l'autre sur la même surface de manière à réduire l'encombrement. Un circuit de commande permet de basculer d'une antenne à l'autre pour faire communiquer alternativement le circuit de lecture/écriture ou l'étiquette électronique avec l'extérieur. Dans ce dispositif, si la station est endommagée, l'étiquette électronique l'est également et les données stockées sur l'étiquette deviennent donc irrécupérables.

Le but de l'invention est de proposer une station de lecture/écriture dans laquelle les paramètres de configuration et des données applicatives sont facilement récupérables même si elle a été profondément endommagée.

Ce but est atteint par une station de lecture/écriture comportant un boîtier incluant notamment une mémoire et une antenne pour échanger des données sans contact par technologie inductive avec des étiquettes électroniques présentant chacune une antenne, une mémoire et des moyens de traitement de données pour interpréter des requêtes envoyées par la station, caractérisée en ce que :
- Une étiquette électronique, dite étiquette électronique intégrée, apte à stocker des données dans sa mémoire, est intégrée dans la station de lecture/écriture,
- l'étiquette électronique intégrée est située dans la station de lecture/écriture à portée de l'antenne de la station de lecture/écriture et est en couplage magnétique permanent avec l'antenne (AN) de la station de lecture/écriture (ST).

Selon l'invention, l'antenne de l'étiquette électronique intégrée et l'antenne de la station sont séparées et indépendantes l'une de l'autre de manière à permettre de récupérer les données sur l'étiquette si par exemple l'antenne de la station est endommagée.

Selon une particularité, l'étiquette électronique intégrée est située dans la station de lecture/écriture de manière à rendre ses données accessibles à toute autre station de lecture/écriture présentée à sa portée.

Selon une autre particularité, la station de lecture/écriture comporte une fente dans laquelle l'étiquette électronique intégrée est insérée de manière amovible.

Selon une autre particularité, l'étiquette électronique intégrée est en isolation galvanique par rapport au reste de la station de lecture/écriture.

Selon une autre particularité, la mémoire de la station de lecture/écriture est constituée par la mémoire de l'étiquette électronique intégrée.

Selon une autre particularité, l'étiquette électronique intégrée est accessible en lecture et/ou en écriture.

Selon une autre particularité, l'étiquette électronique intégrée stocke dans sa mémoire des données relatives à la configuration de la station de lecture/écriture et/ou des données applicatives.

La station de lecture/écriture décrite ci-dessus peut être intégrée dans un capteur tel que par exemple un capteur de pression ou une cellule photoélectrique.

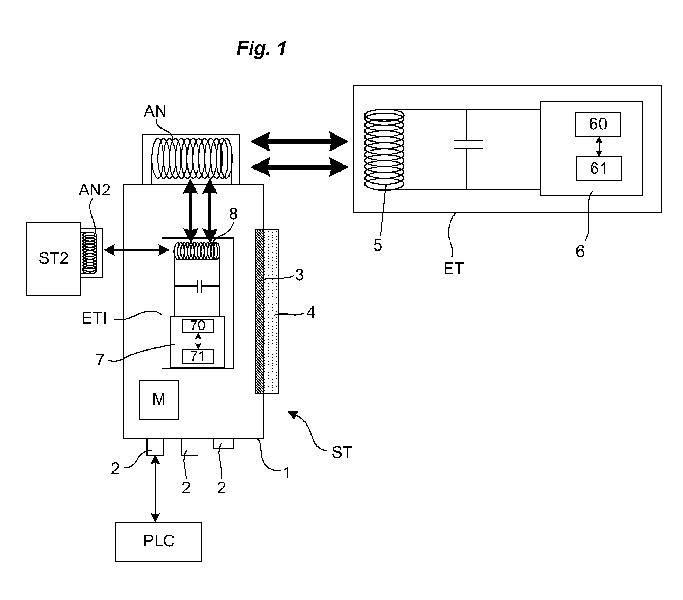

D'autres caractéristiques et avantages vont apparaître dans la description détaillée qui suit en se référant à un mode de réalisation donné à titre d'exemple et représenté par la figure 1 annexée montrant une station de lecture/écriture selon l'invention.

Le système illustré à la figure 1 comporte une station de lecture/écriture ST constitué d'un boîtier 1 incluant notamment une antenne AN pour échanger, sans contact, selon la technologie inductive ou RFID, des données avec des étiquettes électroniques ET qui lui sont présentées.

Les étiquettes électroniques ET sont fixées sur des objets et sont présentées au fur et à mesure à portée de la station de lecture/écriture ST.

Chaque station de lecture/écriture ST dialogue avec l'automatisme PLC (serveur de données sur le réseau) au sein généralement d'un réseau tel que MODBUS, FIPIO, etc... Au sein du réseau d'automatisme, chaque station de lecture/écriture est identifiée par une adresse individualisée.

L'antenne AN de la station ST génère un champ magnétique permettant d'alimenter chaque étiquette électronique ET passant à sa portée et permet à la station ST de dialoguer avec celle-ci. Une station de lecture/écriture ST comporte des connecteurs 2 rapportés sur le boîtier 1 qui permettent le raccordement de l'alimentation, le raccordement au réseau et le raccordement à un pupitre ou à un poste informatique tel qu'un PC. Le boîtier 1 de la station de lecture/écriture ST contient également une mémoire M et des circuits électroniques d'interface avec les connecteurs d'entrées/sorties 2 et avec l'antenne AN.

L'échange de données sans contact s'effectue par RFID qui est une technologie inductive basée sur l'exploitation d'un signal électromagnétique (porteuse) moyenne fréquence pour la transmission sans contact d'informations entre la station et des étiquettes électroniques.

Une étiquette électronique ET comporte une antenne 5 constituée d'un circuit oscillant LC et des circuits électroniques 6 comprenant notamment une mémoire 60 et des moyens de traitement 61 de données pour interpréter les requêtes envoyées par la station de lecture/écriture ST et pour envoyer les informations demandées. L'étiquette électronique ET est alimentée par la "porteuse" émise à partir de l'antenne AN d'une station de lecture ST dès qu'elle arrive dans les limites de portée de ladite station de lecture/écriture ST. L'énergie captée par l'antenne 5 de l'étiquette ET est transformée en énergie électrique et alimente les circuits électroniques 6 internes de l'étiquette ET. L'étiquette électronique ET mémorise des données, exécute les ordres en provenance de la station de lecture/écriture ST et transmet les données demandées vers la station de lecture/écriture ST.

La mémoire 60 contenue dans l'étiquette électronique ET est à titre indicatif une mémoire de technologie RAM, EEPROM ou FERAM et stocke, par exemple sous forme cryptée, un identifiant unique, des paramètres de communication, et des informations relatives à l'objet auquel elle est rattachée.

La procédure d'échange entre la station de lecture/écriture ST et l'étiquette électronique ET comporte plusieurs phases, notamment :
- envoi d'énergie dès qu'une étiquette électronique ET arrive à portée d'une station de lecture/écriture ST,
- envoi par la station de lecture/écriture ST d'un ordre d'identification et réponse de l'étiquette électronique ET avec envoi d'un identifiant unique,
- requête de la station de lecture/écriture ST pour récupérer les paramètres de communication à mettre en place entre la station de lecture/écriture ST et l'étiquette électronique ET,
- récupération des données présentes dans la mémoire 60 de l'étiquette électronique ET.

Selon l'invention, la station de lecture/écriture ST intègre elle-même une étiquette électronique, dite étiquette électronique intégrée ETI, semblable à l'étiquette électronique ET décrite ci-dessus. L'étiquette électronique intégrée ETI comporte donc une antenne 8 constituée d'un circuit oscillant LC, de circuits électroniques 7 composés notamment de moyens de traitement de données 71 et d'une mémoire 70 pour stocker des données tels que des données de configuration de la station de lecture/écriture ST dans laquelle elle est intégrée et/ou des données applicatives. Cette étiquette électronique intégrée ETI est chargée de stocker des données applicatives et/ou des paramètres de configuration de la station de lecture/écriture ST à laquelle elle est associée. Les données applicatives stockées dans l'étiquette ETI sont les données utilisées par la station ST pour l'application à laquelle elle est consacrée. Les données applicatives peuvent être par exemple des identifiants d'étiquettes électroniques ET déterminées lorsque la station ST est par exemple utilisée pour effectuer du contrôle d'accès. L'étiquette électronique intégrée ETI est située dans la station ST à portée de l'antenne AN de la station ST et est donc en couplage magnétique permanent avec l'antenne AN de la station ST. L'antenne de l'étiquette électronique intégrée ETI est séparée de l'antenne AN de la station ST et est indépendante par rapport à celle-ci de manière à ne pas être détériorée si l'antenne AN de la station est endommagée. Ainsi la station de lecture ST peut dialoguer en permanence avec cette étiquette ETI pour lire et/ou écrire des données dans sa mémoire 70.

Lors de chaque mise sous tension de la station de lecture/écriture ST, l'étiquette électronique intégrée ETI détectée par la station envoie son identifiant unique à la station de lecture/écriture ST. Après la mise sous tension et lors du fonctionnement normal de la station de lecture/écriture ST, l'étiquette électronique intégrée ETI est alimentée en permanence par le champ magnétique généré par l'antenne AN de la station ST. Afin d'éviter que l'étiquette ETI ne se déclare sans cesse à la station de lecture/écriture ST alors que la station de lecture ST a déjà eu connaissance de son identifiant, la station de lecture ST peut émettre vers l'étiquette électronique intégrée ETI, un signal lui demandant de ne plus se déclarer.

La mise à jour des données de configuration de la station de lecture/écriture ST entraîne le chargement d'un programme d'écriture de ces nouvelles données dans l'étiquette électronique intégrée ETI. La station de lecture/écriture ST connaissant déjà l'identifiant de son étiquette électronique intégrée ETI, "réveille" alors l'étiquette électronique intégrée ETI. La station de lecture/écriture ST établit un dialogue avec l'étiquette électronique intégrée ETI pour échanger sans contact des données selon un protocole de communication prédéfini comme avec une étiquette électronique ET externe à la station ST. Les données de configuration et/ou applicatives sont écrites et stockées dans la mémoire 70 de l'étiquette électronique intégrée ETI.

En outre, l'étiquette électronique intégrée ETI est située dans la station ST de manière à être à portée de toute station externe ST2 qui pourrait être approchée. Les données de configuration et/ou applicatives mémorisées dans l'étiquette électronique intégrée ETI peuvent ainsi être lues par cette autre station ST2 sans que l'étiquette électronique intégrée ETI ne soit retirée de la station de lecture/écriture ST. En cas de problème ou d'endommagement de la station de lecture/écriture ST, ses données de configuration et/ou applicatives peuvent ainsi être récupérées facilement par une autre station ST2 en présentant l'antenne AN2 de la nouvelle station ST2 à portée de l'étiquette électronique intégrée ETI de la station ST endommagée. La nouvelle station ST2 récupère ainsi les données de configuration et/ou applicatives qu'elle peut écrire dans sa mémoire interne ainsi que sur sa propre étiquette électronique intégrée si elle en possède une. Les données de configuration et/ou applicatives sont donc conservées de manière sûre et sont toujours facilement récupérables.

Selon l'invention, en variante ou en complément, la station de lecture/écriture ST peut également comporter une fente 3 fermée par un clapet 4 dans laquelle l'étiquette électronique intégrée est insérée de manière amovible. Si la station ST est endommagée, l'étiquette électronique intégrée ETI peut donc être facilement retirée pour être soit insérée directement dans une nouvelle station (ST2 par exemple), soit être amenée à portée de la nouvelle station de manière à transférer les données de l'ancienne station ST vers la nouvelle station. Ainsi comme précédemment, aucune configuration de la nouvelle station ST2 n'est nécessaire.

Selon l'invention, l'étiquette électronique intégrée ETI est en isolation galvanique par rapport au reste de la station ST de manière à ne pas être endommagée en cas de problème électrique dans la station de lecture/écriture ST.

Selon l'invention, l'étiquette électronique intégrée ETI peut également servir de mémoire à la station de lecture/écriture ST. Dans ce cas la mémoire M de la station de lecture/écriture ST peut être supprimée. Les données reçues par la station de lecture/écriture ST, par exemple au cours d'un processus industriel, peuvent donc être stockées directement dans la mémoire 70 de l'étiquette électronique intégrée ETI. Cela permet de ne pas doter la station de lecture/écriture ST d'une mémoire spécifique.

Selon l'invention, au sein d'un réseau comportant plusieurs stations ST, chaque station ST peut être adressée et configurée facilement sur le réseau en y insérant une étiquette électronique intégrée ETI pré-programmée avec des données de configuration et/ou des données applicatives pré-enregistrées. Les données peuvent être ensuite transférées dans la mémoire M de la station ST ou maintenues dans l'étiquette électronique intégrée ETI si celle-ci est utilisée directement comme mémoire par la station de lecture/écriture ST.

La station de lecture/écriture selon l'invention peut être par exemple intégrée dans un capteur tel que par exemple un capteur de pression. Cela permet de pouvoir récupérer aisément les données de configuration ou de réglages relatives à ce capteur s'il est endommagé. Un transfert des données de l'étiquette de configuration intégrée du capteur endommagée vers un nouveau capteur doté également d'une station de lecture/écriture est ainsi réalisé immédiatement et rapidement.

Il est bien entendu que l'on peut, sans sortir du cadre de l'invention, imaginer d'autres variantes et perfectionnements de détail et de même envisager l'emploi de moyens équivalents.

## Revendications

1. Station de lecture/écriture (ST) comportant un boîtier (1) incluant notamment une mémoire (M) et une antenne (AN) pour échanger des données sans contact par technologie inductive avec des étiquettes électroniques (ET, ETI) présentant chacune une antenne (5, 8), une mémoire (60, 70) et des moyens de traitement de données (61, 71) pour interpréter des requêtes envoyées par la station (ST), **caractérisée en ce que** :
- une étiquette électronique, dite étiquette électronique intégrée (ETI), apte à stocker des données dans sa mémoire (70), est intégrée dans la station de lecture/écriture (ST),
- l'étiquette électronique intégrée (ETI) est située dans la station de lecture/écriture (ST) à portée de l'antenne (AN) de la station de lecture/écriture (ST) et est en couplage magnétique permanent avec l'antenne (AN) de la station de lecture/écriture (ST).

2. Station de lecture/écriture selon la revendication 1, **caractérisée en ce que** l'étiquette électronique intégrée (ETI) est située dans la station de lecture/écriture (ST) de manière à rendre ses données accessibles à toute autre station de lecture/écriture (ST2) présentée à sa portée.

3. Station de lecture/écriture selon la revendication 1 ou 2, **caractérisée en ce que** la station de lecture/écriture comporte une fente (3) dans laquelle l'étiquette électronique intégrée (ETI) est insérée de manière amovible.

4. Station de lecture/écriture selon l'une des revendications 1 à 3, **caractérisée en ce que** l'étiquette électronique intégrée (ETI) est en isolation galvanique par rapport au reste de la station de lecture/écriture (ST).

5. Station de lecture/écriture selon l'une des revendications 1 à 4, **caractérisée en ce que** la mémoire (M) de la station de lecture/écriture (ST) est constituée par la mémoire (70) de l'étiquette électronique intégrée (ETI).

6. Station de lecture/écriture selon l'une des revendications 1 à 5, **caractérisée en ce que** l'étiquette électronique intégrée (ETI) est accessible en lecture et/ou en écriture.

7. Station de lecture/écriture selon l'une des revendications 1 à 6, **caractérisée en ce que** l'étiquette électronique intégrée (ETI) stocke dans sa mémoire (70) des données relatives à la configuration de la station de lecture/écriture (ST) et/ou des données applicatives.

8. Capteur **caractérisé en ce qu'**il intègre une station de lecture/écriture selon l'une des revendications 1 à 7.
